Europäisches Patentamt

European Patent Office

Office européen des brevets

(11) Numéro de publication: **0 485 933 A1**

# DEMANDE DE BREVET EUROPEEN

(21) Numéro de dépôt: **91119194.8**

(22) Date de dépôt: **11.11.91**

(51) Int. Cl.5: **F16K 3/18**

(30) Priorité: **16.11.90 FR 9014299**

(43) Date de publication de la demande:
**20.05.92 Bulletin 92/21**

(84) Etats contractants désignés:
**AT BE CH DE DK ES FR GB GR IT LI LU NL SE**

(71) Demandeur: **ALCATEL CIT**
**12 Rue de la Baume**
**F-75008 Paris(FR)**

(72) Inventeur: **Saulgeot, Claude**
**11 Clos des Barattes**
**F-74290 Veyrier-du-Lac(FR)**
Inventeur: **Mathieu, Luc**
**1 rue des Cygnes**
**F-74940 Annecy le Vieux(FR)**

(74) Mandataire: **Weinmiller, Jürgen et al**
**Lennéstrasse 9 Postfach 24**
**W-8133 Feldafing(DE)**

(54) **Vanne d'isolement automatique fonctionnant à la dépression et installation utilisant cette vanne.**

(57) Vanne comprenant un corps de vanne (1) comportant deux ouvertures circulaires coaxiales (2, 3) munies chacune d'une bride (4, 5) pour son raccordement à un circuit de fluide et comportant un clapet unique (6) pour l'obturation de l'une des deux dites ouvertures, appelée ouverture d'obturation, ledit clapet étant lié à des moyens (8) permettant d'une part d'amener ledit clapet coaxialement auxdites ouvertures, et d'autre part de dégager le clapet de devant lesdites ouvertures, caractérisée en ce que ledit clapet est lié auxdits moyens (8) avec liberté de mouvement selon son axe, des moyens élastiques (13, 14) assurant, lorsque les pressions sont identiques ou voisines sur les deux faces du clapet, le déplacement axial du clapet dans le sens de son écartement par rapport à ladite ouverture d'obturation (2), le déplacement axial du clapet dans le sens de l'obturation étant provoqué par une surpression sur la face du clapet en regard de l'autre ouverture (3).

L'invention concerne aussi une installation de pompage d'un sas remis alternativement à la pression atmosphérique dans laquelle ladite vanne sert de vanne d'isolement automatique d'une pompe secondaire lors des remises du sas à pression atmosphérique.

FIG.1

La présente invention concerne une vanne du type à tiroir ou pendulaire.

Des vannes de ce type sont bien connues. En particulier, on connaît un mécanisme qui comporte un clapet et un contre-clapet liés l'un à l'autre par des ressorts à lames et dont l'écartement, provoquant l'appui du clapet contre son siège et donc l'étanchéité de la conduite sur laquelle est placée la vanne, est réalisé par la rotation d'une cage à billes, cette rotation entraînant les billes en les faisant sortir d'encoches dans lesquelles elles sont logées lorsque la vanne est ouverte.

Un tel dispositif, ou des systèmes voisins, a une mécanique relativement complexe et est coûteux.

L'invention a pour but de proposer une vanne très simple et économique applicable pour isoler un circuit à basse pression situé en aval de la vanne lorsque se produit une surpression en amont, l'ouverture du clapet étant automatique dès que la surpression a disparu.

L'invention a ainsi pour objet une vanne comprenant un corps de vanne comportant deux ouvertures coaxiales munies chacune d'une bride pour son raccordement à un circuit de fluide et comportant un clapet unique pour l'obturation de l'une des deux dites ouvertures, appelée ouverture d'obturation, ledit clapet étant lié à des moyens permettant, d'une part d'amener ledit clapet coaxialement auxdites ouvertures, et d'autre part de dégager le clapet de devant lesdites ouvertures, caractérisée en ce que ledit clapet est lié auxdits moyens avec liberté de mouvement selon son axe, des moyens élastiques assurant, lorsque les pressions sont identiques ou voisines sur les deux faces du clapet, le déplacement axial du clapet dans le sens de son écartement par rapport à ladite ouverture d'obturation, le déplacement axial du clapet dans le sens de l'obturation étant provoqué par une surpression sur la face du clapet en regard de l'autre ouverture.

Selon une réalisation particulière, lesdits moyens permettant d'amener le clapet coaxialement aux ouvertures ou de l'en dégager comprennent une tige à laquelle est lié ledit clapet par le moyen d'axes liés perpendiculairement au clapet et traversant librement des orifices de ladite tige, lesdits moyens élastiques étant situés sur lesdits axes entre ladite tige et une butée sur les extrémités desdits axes.

L'invention a aussi pour objet une installation comprenant une chambre sous vide communiquant avec un sas d'entrée et de sortie par une vanne de transfert, le sas comportant un moyen de remise à pression atmosphérique et étant équipé d'une pompe secondaire mécanique rotative raccordée audit sas par le moyen d'une vanne d'isolement et dont le refoulement est relié à l'aspiration d'une pompe primaire, un moyen de pompage primaire étant en outre directement relié audit sas par l'intermédiaire d'une troisième vanne, caractérisée en ce que ladite vanne d'isolement utilisée est la vanne ci-dessus définie dont ladite ouverture d'obturation est reliée à la pompe secondaire tandis que l'autre ouverture est reliée audit sas.

On va maintenant donner la description d'un exemple de mise en oeuvre de l'invention en se référant au dessin annexé dans lequel :

La figure 1 représente partiellement, en coupe, une vanne selon l'invention.

La figure 2 est une vue d'un détail de la figure 1 qui montre une variante permettant un réglage de la pression différentielle.

La figure 3 montre schématiquement une installation utilisant la vanne de la figure 1.

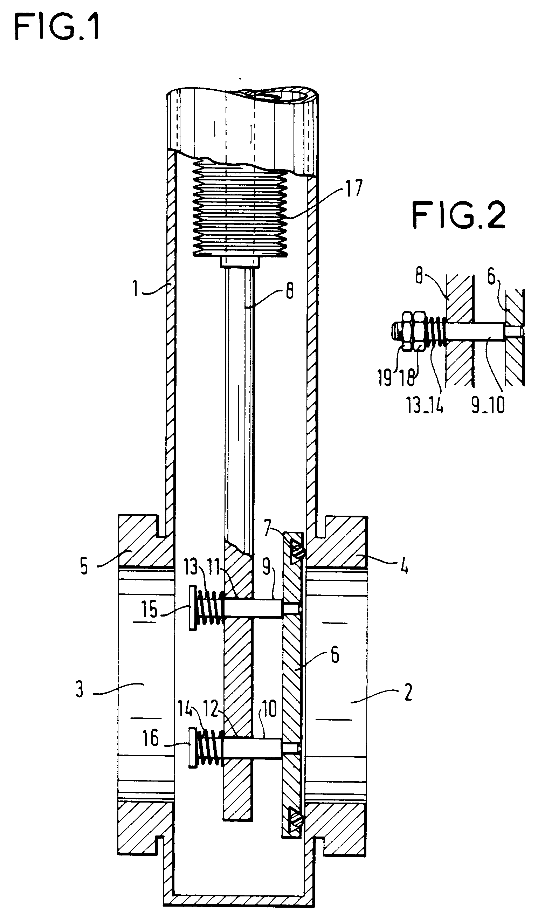

En se référant à la figure 1, la vanne de l'invention comprend un corps de vanne 1 comportant une première ouverture circulaire 2, appelée ouverture d'obturation, et une seconde ouverture circulaire 3. Ces ouvertures sont situées face à face coaxialement, et sont munies chacune d'une bride, respectivement 4 et 5, pour le raccordement de la vanne à un circuit de fluide.

A l'intérieur du corps 1 est situé un clapet d'obturation unique 6 pour l'obturation de l'ouverture d'obturation 2. Ce clapet d'obturation 6 est équipé d'un joint d'étanchéité 7.

Le clapet d'obturation 6 est relié à une tige 8 par le moyen de deux axes 9 et 10 fixés perpendiculairement à la surface du clapet. Ces axes 9 et 10 traversent librement des orifices 11 et 12 effectués dans la tige 9 et un ressort, respectivement 13 et 14, est monté sur chacun de ces deux axes 9 et 10 entre la tige 9 et une butée, respectivement 15 et 16, à l'extrémité de chaque axe.

Ainsi, les ressorts 13 et 14 agissent dans le sens du décollement du clapet de son siège, donc dans le sens de son ouverture. La tige 8 permet d'écarter le clapet de devant les ouvertures 2 et 3 ou bien au contraire, lors de la fermeture de la vanne, de le placer coaxialement à ces ouvertures. Ainsi, cette tige 8 peut, soit coulisser selon son axe, soit avoir un mouvement pendulaire. Ces deux types de mouvements sont bien connus, et ne font nullement partie de l'invention. Un dispositif ne faisant pas partie de l'invention, assure également d'une manière connue l'étanchéité du corps de vanne, par exemple un soufflet 17 si la tige 8 coulisse selon son axe.

Ainsi, si les pressions de chaque côté du clapet 6 sont identiques ou voisines, (cela dépendant de la raideur des ressorts 13, 14) le clapet est ouvert. En revanche, si une pression sensiblement supérieure survient du côté de l'ouverture 3 par rapport à la pression existante du côté de l'ouverture d'obturation 2, le clapet se ferme.

La raideur des ressorts 13 et 14 est choisie en fonction de la surpression souhaitée provoquant la fermeture du clapet, cette raideur pouvant être très faible. Comme le montre le détail de la figure 2, la pression différentielle peut être rendue réglable en utilisant des axes 9 et 10 à extrémité filetée sur laquelle est montée une butée constituée par un écrou 18 et un contre-écrou 19.

Comme on le voit, la vanne proposée est très simple et très économique, l'ouverture et la fermeture du clapet étant automatique et ne nécessitant aucun mécanisme spécial. Bien entendu elle n'est utilisable que dans les cas où l'on veut isoler un circuit raccordé à l'ouverture 2 d'un circuit raccordé à l'ouverture 3 où la pression passe successivement d'une valeur élevée, par exemple la pression atmosphérique, à une pression voisine de celle qui règne du côté de l'ouverture 2.

Dans ce cas là, on utilise le flux gazeux pour fermer le clapet et il est alors inutile d'utiliser une vanne à mécanisme compliqué et coûteux.

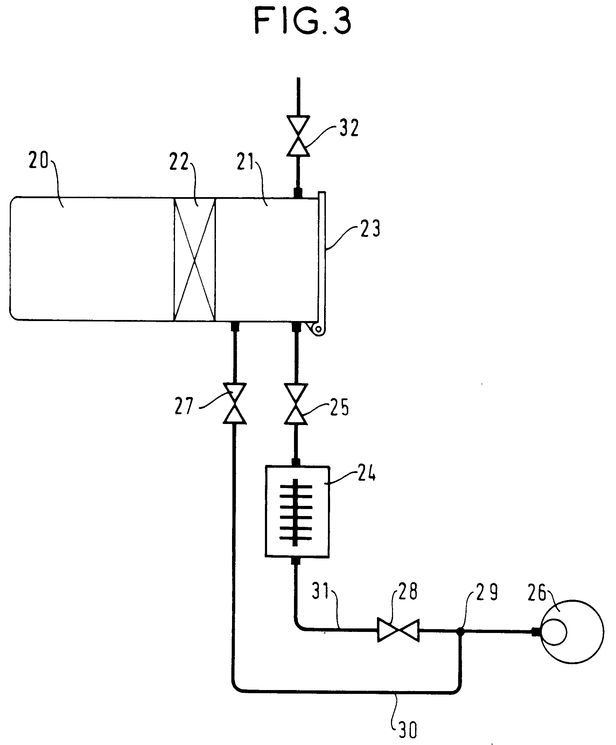

La figure 3 montre une application particulièrement intéressante d'utilisation de la vanne décrite ci-dessus.

En 20, on a par exemple une chambre de dépôt sous vide qui est reliée à un sas 21 par une vanne de transfert 22. Le sas comporte une porte 23 pour l'introduction et la sortie des objets à traiter dans la chambre de dépôt 20.

Le sas 21 est pompé par un groupe de pompage comportant une pompe secondaire mécanique rotative 24, par exemple une pompe turbomoléculaire du type à ailettes ou à canal de Gaëde qui est reliée au sas 21 par une vanne d'isolement 25 et dont le refoulement est relié à une pompe primaire 26 telle qu'une pompe à palettes.

La pompe primaire 26 est en outre reliée directement au sas 21 par une troisième vanne 27. Enfin, une quatrième vanne 28 est disposée au refoulement de la pompe secondaire 24. Ces deux vannes 27 et 28 permettent de faire communiquer la pompe primaire 26, soit directement avec le sas 21 en ouvrant la troisième vanne 27 et en fermant la quatrième vanne 28, soit avec le refoulement de la pompe secondaire 24 en ouvrant la quatrième vanne 28 et en fermant la troisième vanne 27. Ces deux vannes 27 et 28 pourraient être remplacées par une vanne à trois voies placée en 29 au point de jonction des conduites 30 et 31.

On pourrait bien entendu également avoir deux pompes primaires indépendantes. Dans ce cas, la seconde pompe primaire serait directement reliée à la conduite 30 qui ne viendrait pas se raccorder en 29 à la conduite 31.

Le sas 21 comporte une vanne d'entrée d'air 32.

Un tel schéma est parfaitement connu et son fonctionnement est le suivant :

Au cours du premier cycle de pompage, le sas est pompé jusqu'aux environs du mbar par la seule pompe primaire 26, la troisième vanne 27 étant ouverte et la quatrième vanne 28 étant fermée. En effet, jusqu'à cette pression, la pompe secondaire 24 n'est pas performante ne pouvant pas tourner à sa vitesse nominale à cause du flux gazeux trop élevé. Lorsque l'on a atteint cette pression, la pompe secondaire 24 est démarrée et l'on ferme la vanne 27 et ouvre la vanne 28. Une fois le vide limite atteint à l'aspiration de la pompe secondaire, on ouvre la vanne d'isolement 25, puis une fois le vide limite atteint dans le sas 21 et la chambre 20 on introduit dans la chambre 20 les objets préalablement introduits dans le sas 21 à travers la vanne de transfert 22, puis on ferme la vanne de transfert 22. Une fois le traitement effectué, les objets sont sortis de la chambre 20 après ouverture de la vanne de transfert 22. Une fois que les objets sont dans le sas 21, on referme la vanne de transfert 22 pour maintenir le vide dans la chambre 20.

On ferme alors la vanne d'isolement 25 et la vanne 28, on remet le sas à la pression atmosphérique par la vanne d'entrée d'air 32 avant d'ouvrir la porte 23 et d'extraire les objets.

Ainsi, pour le cycle suivant, la pompe secondaire 24 est maintenue sous basse pression et en rotation continue par la vanne d'isolement 25. Pour effectuer un autre cycle, on introduit de nouveaux objets dans le sas 21, on ferme la porte 23 et la vanne d'entrée d'air 32, on ouvre la vanne 27 et dès que la pression a atteint quelques mbar, on ferme la vanne 27 et on ouvre les vannes 25 et 28. Dès que le vide limite est atteint, on ouvre la vanne de transfert 22 pour passer les objets dans la chambre 20.

Ainsi, on voit que le sas 21 passe alternativement de la pression atmosphérique à une pression de vide secondaire de $10^{-4}$ mb/$10^{-6}$ mbar et que l'on souhaite isoler la pompe secondaire 24 à chaque fois que le sas 21 est remis à cette pression atmosphérique. C'est le rôle de la vanne d'isolement 25 qui peut ainsi tout à fait être remplacée par une vanne telle que celle de l'invention représentée figure 1.

A cet effet, l'ouverture 3 de la vanne est raccordée par sa bride 5 au sas 21 tandis que l'ouverture d'obturation 2, par sa bride 4 est raccordée à l'aspiration de la pompe secondaire 24.

On voit que lors de la remise à la pression atmosphérique du sas 21, la brusque remontée en pression à l'ouverture 3 de la vanne viendra appliquer le clapet 6 sur son siège de l'ouverture 2, isolant ainsi automatiquement la pompe secondaire 24.

Dans le sens inverse, lorsque, après fermeture de la porte 23 et de la vanne d'entrée d'air 32 le sas est pompé par la pompe primaire 26, on atteindra un temps où les ressorts 13, 14 ouvriront le clapet. On peut choisir la raideur de ces ressorts pour que cela se produise à peu près lorsque la pression dans le sas 21 est aux environs de $10^{-1}$ mbar, ou bien utiliser comme le montre la figure 2 une butée réglable à écrou et contre-écrou.

**Revendications**

1. Vanne comprenant un corps de vanne (1) comportant deux ouvertures circulaires coaxiales (2, 3) munies chacune d'une bride (4, 5) pour son raccordement à un circuit de fluide et comportant un clapet unique (6) pour l'obturation de l'une des deux dites ouvertures, appelée ouverture d'obturation, ledit clapet étant lié à des moyens (8) permettant d'une part d'amener ledit clapet coaxialement auxdites ouvertures, et d'autre part de dégager le clapet de devant lesdites ouvertures, caractérisée en ce que ledit clapet est lié auxdits moyens (8) avec liberté de mouvement selon son axe, des moyens élastiques (13, 14) assurant, lorsque les pressions sont identiques ou voisines sur les deux faces du clapet, le déplacement axial du clapet dans le sens de son écartement par rapport à ladite ouverture d'obturation (2), le déplacement axial du clapet dans le sens de l'obturation étant provoqué par une surpression sur la face du clapet en regard de l'autre ouverture (3).

2. Vanne selon la revendication 1, caractérisée en ce que lesdits moyens permettant d'amener le clapet coaxialement aux ouvertures ou de l'en dégager comprennent une tige (8) à laquelle est lié ledit clapet (6) par le moyen d'axes (9, 10) liés perpendiculairement au clapet et traversant librement des orifices (11, 12) de ladite tige (8), lesdits moyens élastiques (13, 14) étant situés sur lesdits axes (9, 10) entre ladite tige (8) et une butée (15, 16) sur les extrémités desdits axes.

3. Vanne selon la revendication 2, caractérisée en ce que ladite butée est réglable et constituée par un écrou (18) et un contre-écrou (19) montés sur l'extrémité filetée desdits axes (9, 10).

4. Installation comprenant une chambre sous vide (20) communiquant avec un sas (21) d'entrée et de sortie par une vanne de transfert (22), le sas comportant un moyen (32) de remise à pression atmosphérique et étant équipé d'une pompe secondaire mécanique rotative (24) raccordée audit sas par le moyen d'une vanne d'isolement (25) et dont le refoulement est relié à l'aspiration d'une pompe primaire (26), un moyen de pompage primaire (26) étant en outre directement relié audit sas (21) par l'intermédiaire d'une troisième vanne (27), caractérisée en ce que ladite vanne d'isolement (25) utilisée est une vanne selon l'une des revendications 1 ou 2, dont ladite ouverture d'obturation (2) est reliée à la pompe secondaire (24) tandis que l'autre ouverture (3) est reliée audit sas (21).

5. Installation selon la revendication 4, caractérisée en ce que ledit moyen de pompage primaire (26) est constitué par ladite pompe primaire (26), des moyens (27, 28) étant prévus pour permettre la communication de l'aspiration de ladite pompe primaire (26) soit avec le refoulement de la pompe secondaire (24), soit avec ledit sas (21).

# FIG.1

# FIG.2

# FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 643 069 (SCHERTLER)<br>* figure 4 *<br>--- | 1,2 | F 16 K 3/18 |
| A | DE-A-2 311 286 (ZIMMERMANN & JANSEN)<br>* figure 1 *<br>--- | 1,2 | |
| A | DE-A-3 209 217 (SCHERTLER)<br>* figure 1 *<br>--- | 1 | |
| A | US-A-3 036 813 (HEADRICK)<br>* figure 1 *<br>--- | 1 | |
| A | GB-A-2 053 375 (PIERBURG GMBH & CO. KG)<br>* le document en entier *<br>----- | 4,5 | |

| | | | DOMAINES TECHNIQUES RECHERCHES (Int. Cl.5) |
|---|---|---|---|
| | | | F 16 K |

Le présent rapport a été établi pour toutes les revendications

| Lieu de la recherche | Date d'achèvement de la recherche | Examinateur |
|---|---|---|
| BERLIN | 28-12-1991 | SCHLABBACH M |

EPO FORM 1503 03.82 (P0402)